(19) Europäisches Patentamt

European Patent Office

Office européen des brevets

(11) **EP 1 370 033 B1**

(12) **EUROPEAN PATENT SPECIFICATION**

(45) Date of publication and mention
of the grant of the patent:
**01.03.2006 Bulletin 2006/09**

(51) Int Cl.:
***H04L 12/56*** (2006.01)

(21) Application number: **03012163.6**

(22) Date of filing: **03.06.2003**

(54) **Call admission control method and communication system to which method is applied**

Rufzugangskontrollverfahren und Kommunikationssystem in dem das Verfahren angewandt wird

Méthode de contrôle d'admission des appels et le système de communication auxquels la méthode est appliquée

(84) Designated Contracting States:
**DE GB**

(30) Priority: **05.06.2002 JP 2002164815**

(43) Date of publication of application:
**10.12.2003 Bulletin 2003/50**

(73) Proprietor: **NTT DoCoMo, Inc.**
**Tokyo 100-6150 (JP)**

(72) Inventors:
• **Ishikawa, Yoshihiro,**
**Intell. Prop. Dep.**
**2-11-1, Nagatacho,**
**Chiyoda-ku,**
**Tokyo (JP)**
• **Maebara, Akihiro,**
**Intell. Prop. Dep.**
**2-11-1, Nagatacho,**
**Chiyoda-ku,**
**Tokyo (JP)**
• **Onoe, Seizo,**
**Intell. Prop. Dep.**
**2-11-1, Nagatacho,**
**Chiyoda-ku,**
**Tokyo (JP)**
• **Hiramoto, Yoshitaka,**
**Intell. Prop. Dep.**
**2-11-1, Nagatacho,**
**Chiyoda-ku,**
**Tokyo (JP)**

(74) Representative: **HOFFMANN EITLE**
**Patent- und Rechtsanwälte**
**Arabellastrasse 4**
**81925 München (DE)**

(56) References cited:
**EP-A- 0 673 138**      **WO-A-01/41376**

• **BAO Y ET AL: "PERFORMANCE-DRIVEN ADAPTIVE ADMISSION CONTROL FOR MULTIMEDIA APPLICATIONS" ICC '99. 1999 IEEE INTERNATIONAL CONFERENCE ON COMMUNICATIONS. CONFERENCE RECORD. VANCOUVER, CA, JUNE 6 - 10, 1999, IEEE INTERNATIONAL CONFERENCE ON COMMUNICATIONS, NEW YORK, NY: IEEE, US, vol. 1, 6 June 1999 (1999-06-06), pages 199-203, XP000897161 ISBN: 0-7803-5285-8**
• **DEVALLA B ET AL: "Adaptive connection admission control for mission critical real-time communication networks" MILITARY COMMUNICATIONS CONFERENCE, 1998. MILCOM 98. PROCEEDINGS., IEEE BOSTON, MA, USA 18-21 OCT. 1998, NEW YORK, NY, USA, IEEE, US, 18 October 1998 (1998-10-18), pages 614-620, XP010307857 ISBN: 0-7803-4506-1**

## Description

BACKGROUND OF THE INVENTION

1. Field of the Invention

The present invention relates to a call admission control method and a communication system to which the method is applied, and more particularly to a call admission control method and a communication system to which the method is applied in which, when resources shared by a plurality of communications are allocated to each communication, the priority levels in resource allocation differ between communication type.

2. Description of the Related Art

In "Performance driven adaptive admission control for multimedia applications"; Yin Bao, Adarshpal Sethi; ICC '99, 1999 IEEE International Conference On Communications, Conference Record, Vancouver, CA, June 6-10, 1999, IEEE International Conference On Communications, New York, NY, IEEE U.S. (06-06-1999), 1, 199-203, there is described a performance-driven adaptive admission control for multimedia applications, wherein the conservativeness of the proposed admission control scheme is self-adjusted based on a measured QoS performance of existing multimedia flows.

In general, when a request to establish a line connection is made to start communication or to establish a line with a higher communication speed in a public communication system where many subscribers use the common facilities during communication, the resources are allocated to the communication from free resources of the facilities. After the communication is finished, the allocated resources are released for use in allocating them to other communications. In this case, the call admission control function checks if resources satisfying the request are available and, if there are not enough resources satisfying the request, rejects the request to maintain the quality of communication that is being executed.

In some cases, whether or not free resources are available may be checked simply by checking whether or not a line is being used. In some other cases, for example, in a packet communication system where fluctuating traffic flows from a number of subscribers are multiplexed on a statistical basis, it is necessary to determine the acceptance of calls on a statistical basis based on the average traffic while allowing for an instantaneous fluctuation in traffic. For example, for use in a mobile communication system using a CDMA (Code DivisionMultiple Access) technology, which spreads user information between a wireless base station and a mobile station over a wireless spectrum that is broader compared to the transmission speed, Japanese Patent Laid-Open Publication No.Hei 8-191481 "Call Admission Control Method and Device" and WO98/30057 "Call Admission Control Method and Mobile Station Unit in CDMA Mobile Communication System" disclose a method for checking the current traffic load to determine if a new call will be accepted.

Japanese Patent Laid-Open Publication No.Hei 8-191481 discloses a method for determining the acceptance of a new call based on the predicted value of an interference amount made by a base station. The publication describes in detail that the interference amount on the uplink in a CDMA system is an observation amount corresponding to the traffic.

On the other hand, WO98/30057 discloses a method for determining the acceptance of a call in a mobile station by using information on the interference amount on the uplink or the amount of transmission power on the downlink reported by a base station. The publication describes in detail that, on a CDMA downlink, the total amount of transmission power of the base station is an observation amount corresponding to the traffic. In either case, the traffic may be identified in many communication systems in some way or other and a call admission control methodbased on the measured traffic is used.

Recently, in addition to the traditional voice communications, various types of services are provided in the world of communication including video phones, data transmission, or Internet connection. They differ not only in transmission speed but also in many aspects. For example, voice communications and video phones have a strict delay requirement and permit a delay of up to only several hundred milliseconds, while electronic mail permits longer delays. Therefore, it is required that calls from those services, each with its own nature, be accepted not in the same manner but in a flexible manner with the acceptability differing from service to service. In view of this, the method disclosed in Patent No.3179021 provides a plurality of determination thresholds for a plurality of service types to appropriately determine the acceptance of calls for each service type by comparing the current traffic measurement result with those thresholds.

The main object of the call admission control method described above is to reduce the call loss probability when the traffic load is heavy by making it difficult for a many-resource-requiring call to be accepted or to increase the whole communication quality by delaying communications with less-strict delay requirements while expediting communications with strict delay requirements. However, one of the problems with the conventional call admission control method described above is that the method is applied even when the traffic load is low where calls may be accepted regardless of resource requirements or delay requirements. This results in that, though enough resources are available, the call loss probability of a specific communication type increases or its delay time becomes long.

## SUMMARY OF THE INVENTION

In view of the foregoing, it is an object of the present invention to provide a call admission control method and a communication system to which the call admission control method is applied that prevent communication, which depends on communication types, from being performed partially when a plurality of communications of different communication types are performed while sharing the common resources.

To achieve the above object, there is provided a call admission control method for use in a communication system having the features of claim 1.

According to the present invention, a plurality of different threshold values, which are used for determining whether or not the resources are to be allocated, are set up in advance according to the communication types and a predetermined number of divided traffic amount ranges such that a difference in ease of resource allocation between the communication types increases as a traffic value increases. When a communication connection request is made, a traffic of resources allocated and shared at that time is measured. One of the plurality of threshold values is selected according to the communication type of a communication associated with the connection request and the measured traffic. Whether or not resources maybe allocated to the communication associated with the connection request is determined based on the selected threshold value and the measured traffic.

Also, according to the present invention, when a communication connection request is made, a traffic of resources allocated and shared at that time is measured. A plurality of different threshold values, which are used to determine whether or not the resources are to be allocated, are updated and set up according to the communication types such that a difference in ease of resource allocation between the communication types increases as the measured traffic value increases. One of the plurality of threshold values is selected according to the communication type of the communication associated with the connection request, and whether or not resources may be allocated to the communication associated with the connection request is determined based on the selected threshold value and the measured traffic.

In a preferred embodiment of the present invention, when two communication types, communication type 0 and communication type 1, are provided, the traffic T is measured using an expression

$$T = C0 \times M0 + C1 \times M1$$

where C0 and C1 are a number of communications being executed for communication type 0 and for communication type 1, respectively, and where M0 and M1 are a number of lines required for one communication of communication type 0 and for one communication of communication type 1, respectively.

Further, to achieve the above object, there is provided a communication system having the features of claim 4.

According to the present invention, when a communication connection request is made, the measurement unit measures a traffic of resources allocated and shared at that time. The memory unit stores therein a plurality of threshold values used for determining whether or not the resources are to be allocated to the communication associated with the connection request. Those threshold values, which differ from each other according to the communication types, are updated and set up in the memory unit such that a difference in ease of resource allocation between the communication types increases as the measured traffic value increases. The call admission controller selects one of the plurality of threshold values according to the communication type of the communication associated with the connection request and determines whether or not resources may be allocated to the communication associated with the connection request based on the selected threshold value and the measured traffic.

In a preferred embodiment of the present invention , when two communication types, communication type 0 and communication type 1, are provided, the measurement unit measures the traffic T using an expression

$$T = C0 \times M0 + C1 \times M1$$

where C0 and C1 are a number of communications being executed for communication type 0 and for communication type 1 respectively and where M0 and M1 are a number of lines required for one communication of communication type 0 and for one communication of communication type 1 respectively.

The nature, principle and utility of the invention will become more apparent from the following detailed description when read in conjunction with the accompanying drawings.

## BRIEF DESCRIPTION OF THE DRAWINGS

In the accompanying drawings:

FIG.1 is a diagram showing the configuration of an embodiment of a communication system in which a call admission control method according to the present invention is implemented;
FIG. 2 is a diagram showing an example of threshold values which are stored in a memory, which correspond to communication types and a total traffic T, and which are used to determine whether or not a call is to be accepted;

FIG.3 is a flowchart showing the processing procedure of one embodiment of the call admission control method according to the present invention;

FIG.4 is a diagram showing the configuration of a modification of one embodiment of the communication system in which the call admission control method according to the present invention is implemented;

FIG. 5 is a diagram showing an example of threshold values which correspond to the modification shown in FIG. 4 and which are stored in the memory; and

FIG.6 is a flowchart showing the processing procedure corresponding to the modification shown in FIG. 4.

## DESCRIPTION OF THE PREFERRED EMBODIMENTS

An embodiment of a call admission control method according to the present invention and a communication system to which the method is applied will be described below with reference to the drawings.

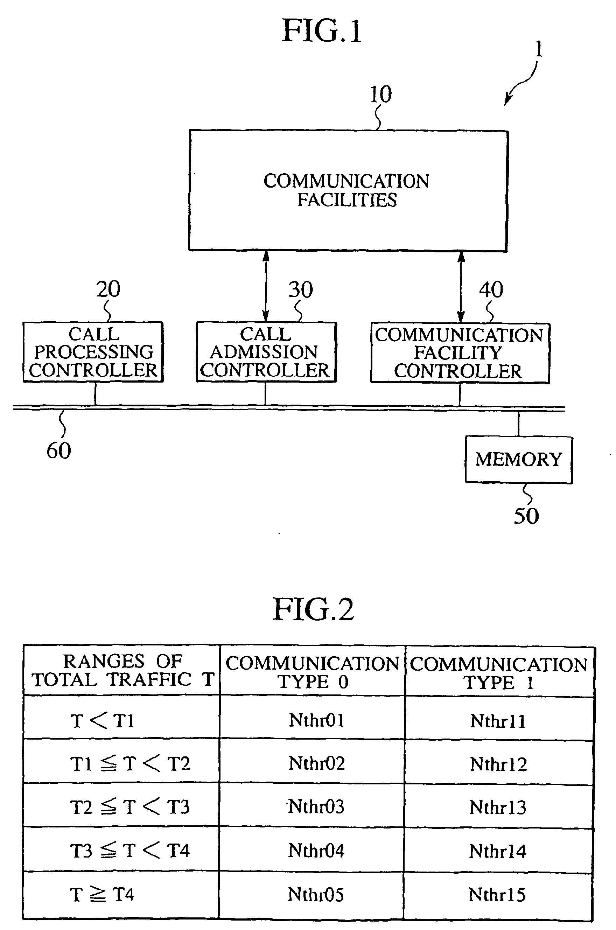

FIG.1 is a diagram showing the configuration of one embodiment of a communication system in which a call admission control method according to present invention is implemented.

Referring to FIG.1, a communication system 1 comprises communication facilities 10, a call processing controller 20, a call admission controller 30, a communication facility controller 40, a memory 50, and a bus 60. The communication facilities 10 are shared by a plurality of communications. The call processing controller 20 manages the establishment or release of a call and instructs the communication facility controller 40 to allocate or release the communication facilities 10. The call admission controller 30 reads information from the memory 50 as necessary to check whether or not a call is to be accepted. In response to an instruction from the call processing controller 20, the communication facility controller 40 allocates or releases the communication facilities 10. The call processing controller 20, call admission controller 30, communication facility controller 40, and memory 50 are interconnected via the bus 60 for communication.

FIG.2 is a diagram showing an example of thresholds stored in the memory 50. Those thresholds, provided for the communication types and the ranges of the total traffic T, are used to determine whether or not a call is to be accepted. For example, if communication type 0 has a higher transmission speed and/or a smaller delay tolerance than that of communication type 1. the relation of thresholds is Nthr0i < Nthrli ($\forall i$, i=1 to 5). That is, a call classified into communication type 1 is made easier to be accepted. In addition, the present invention is characterized in the relation (Nthr01/Nthr11) > (Nthr02/Nthr12) > (Nthr03/Nthr13) > (Nthr04/Nthr14) > (Nthr05/Nthr15). That is, as the measured total traffic T becomes higher, the call acceptability of communication type 0 is made lower in relation to that of communication type 1. In other words, as the measured total traffic T becomes lower, the difference between the call acceptability of communication type 0 and that of communication type 1 becomes smaller. This relieves the problem that, when the measured total traffic T is low, communications belonging to communication type 0, that is, communications requiring high-speed transmission speed and/or small delay tolerance, are not accepted excessively.

In FIG.2, because there are two communication types, 0 and 1, and the total traffic T is divided into five ranges, a total of 10 thresholds are provided. For example, when the system determines whether to accept a call of communication type 0 when the measurement result of the total traffic T is equal to or higher than T2 but lower than T3, the threshold value of Nthr03 is read.

Although there are two communication types, 0 and 1, and the total traffic T is divided into five ranges in this embodiment, the number of communication types and the number of ranges are not limited to those numbers.

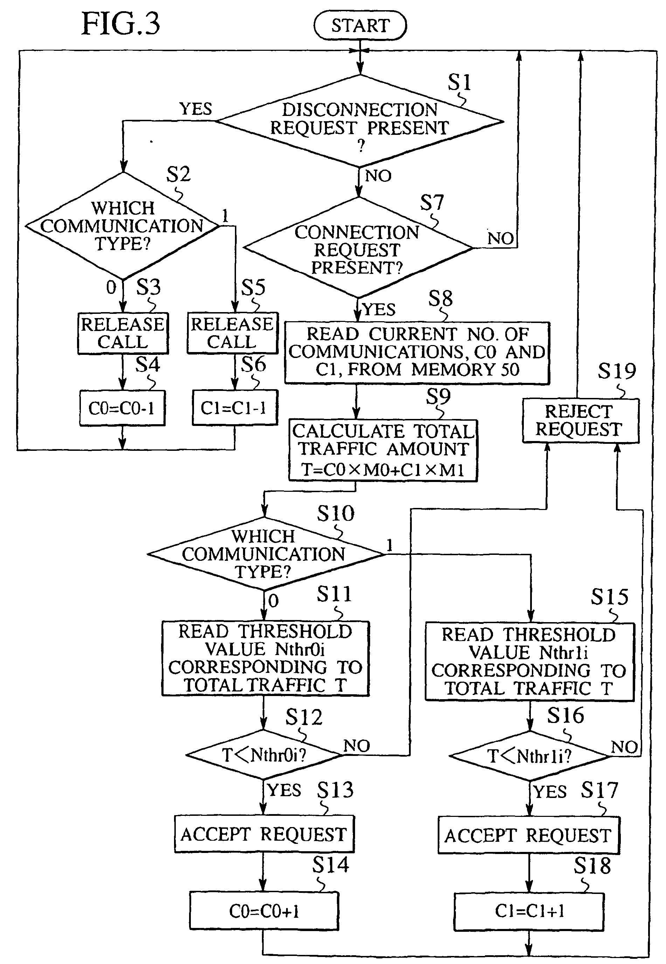

FIG.3 is a flowchart showing the processing procedure for one embodiment of the call admission control method according to the present invention.

In this embodiment, there are two communication types, 0 and 1, corresponding to those in FIG.2. In this example, one communication of communication type 0 and communication type 1 requires M0 lines and M1 lines, respectively. The total number of lines in use is used as the total traffic value and, if this value is lower than the threshold, the system determines that the call may be accepted. Mos t typically, the total number of lines in use is used as the total traffic value; however, as with the number of communication types, some other value may also be used as the total traffic value. Neither is the determination method limited to the comparison between the total traffic and the threshold value ; some other determination method may also be used.

The following describes the processing procedure with reference to FIG.3.

First, the call processing controller 20 shown in FIG.1 checks if a request to disconnect communication is present (step 1). If a request to disconnect communication is present (Yes), control is passed to step 2. If a request to disconnect communication is not present (No), control is passed to step 7.

In step 2, the call processing controller 20 checks the communication type of communication to be disconnected. If the communication type is 0, the call processing controller 20 releases the call of the communication (step 3), decrements variable C0 by 1 (step 4), and passes control back to step 1. On the other hand, if the communication type is 1, the call processing controller 20 releases the call of the communication (step 5), decrements variable C1 by 1 (step 6), and passes control back to step 1. Variables C0 and C1, each of which contains the number of active communications of communication type 0 and communication type 1 respectively, are stored in the memory 50 in FIG.1.

In step 7, the call admission controller 30 checks if a connection request is present. If a connection request is not present (No), control is passed back to step 1. On the other hand, if a connection request is present, the call admission controller 30 reads variables C0 and C1, in which the number of active communications of communication type 0 and communication type 1 are stored, from the memory 50 (step 8) and calculates the current total traffic T using the expression $T = C0 \times M0 + C1 \times M1$ (step 9). Then, the call admission controller 30 checks the communication type of the communication associated with the connection request.

If it is found as the result of step 10 that the communication type is 0, the call admission controller 30 reads the threshold value $Nthr0i$ from the memory 50 (step 11). This threshold value corresponds to communication type 0 and to the total traffic T calculated in step 9. Then, the call admission controller 30 checks if the calculated total traffic T is lower than the threshold value $Nthr0i$ that has been read ($T < Nthr0i$) (step 12). If the total traffic T is equal to or higher than the threshold value $Nthr0i$ (No), the call admission controller 30 rejects the acceptance of the connection request (step 19) and passes control back to step 1. On the other hand, if the total traffic T is lower than the threshold value $Nthr0i$ (Yes), the call admission controller 30 performs acceptance processing for the connection request (step 13), increments variable C0 by 1 (step 14), and passes control back to step 1.

If it is found as the result of step 10 that the communication type is 1, the call admission controller 30 reads the threshold value $Nthr1i$ from the memory 50 (step 15). This threshold value corresponds to communication type 1 and to the total traffic T calculated in step 9. Then, the call admission controller 30 checks if the calculated total traffic T is lower than the threshold value $Nthr1i$ that has been read ($T < Nthr1i$) (step 16). If the total traffic T is equal to or higher than the threshold value $Nthr1i$ (No), the call admission controller 30 rejects the acceptance of the connection request (step 19) and passes control back to step 1. On the other hand, if the total traffic T is lower than the threshold value $Nthr1i$ (Yes), the call admission controller 30 performs acceptance processing for the connection request (step 17), increments variable C1 by 1 (step 18), and passes control back to step 1.

After that, the call processing controller 20 manages the establishment or releases of the call according to the processing result of the call admission controller 30 and instructs the communication facility controller 40 to allocate or release the communication facilities 10. In response to the instruction from the call processing controller 20, the communication facility controller 40 allocates or releases the communication facilities 10.

(Modification)

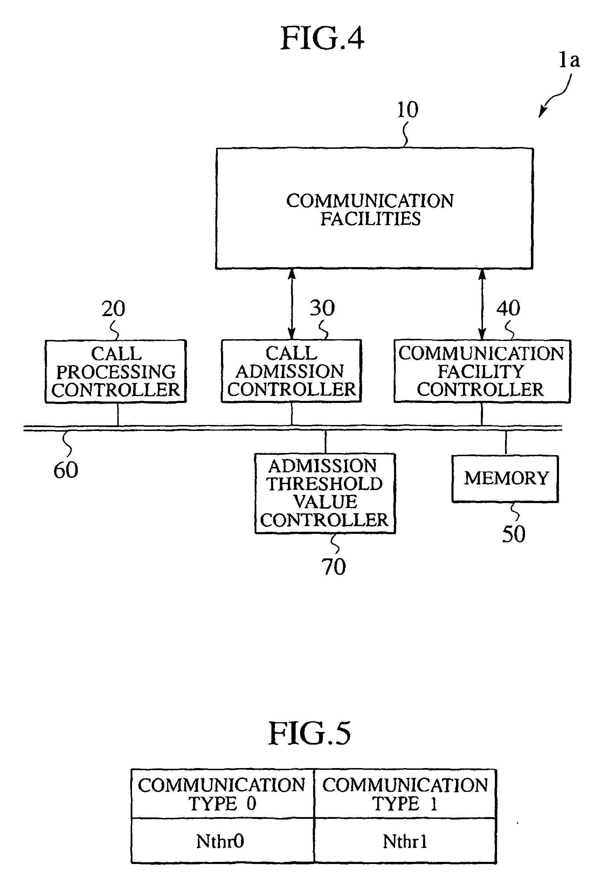

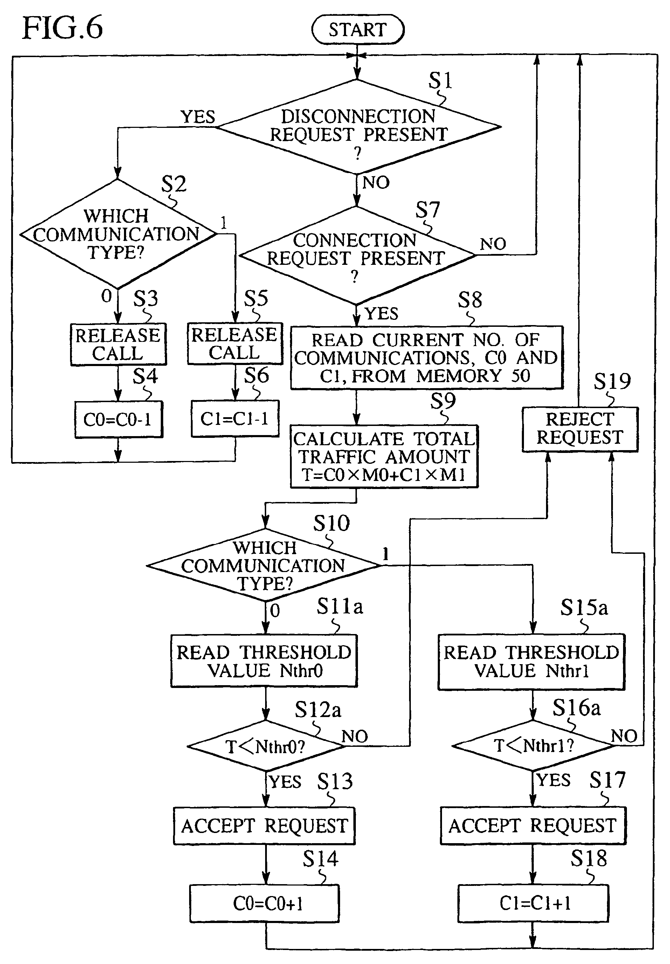

FIG.4 is a diagram showing the configuration of a modification of one embodiment of a communication system in which the call admission control method according to the present invention is implemented. FIG. 5 is a diagram showing an example of threshold values corresponding to the modification in FIG.4 and stored in the memory 50. FIG.6 is a flowchart showing the processing procedure corresponding to the modification shown in FIG.4.

In this modification, only two areas, in which the threshold values corresponding to two communication types are stored, are allocated in the memory 50 as shown in FIG.5, as in the conventional system. On the other hand, a communication system 1a in this modification has the configuration as shown in FIG.4, in which an admission threshold value controller 70 is added to the communication system 1.

In this modification, the admission threshold value controller 70 performs the processing of step 8 and step 9. That is, the admission threshold value controller 70 reads variables C0 and C1, each of which contains the number of active communications of communication type 0 and communication type 1 respectively, from the memory 50 (step 8) and calculates the current total traffic T based on the expression $T = C0 \times M0 + C1 \times M1$ (step 9). The admission threshold value controller 70 stores the threshold values $Nthr0$ and $Nthr1$, corresponding to the calculated total traffic T, in the memory 50. Then, the call admission controller 30 checks the communication type of communication of the connection request (step 10).

If it is found as the result of step 10 that the communication type is 0, the call admission controller 30 reads the threshold value $Nthr0$ corresponding communication type 0 from the memory 50 (step 11a). Then, the call admission controller 30 checks if the total traffic T is lower than the threshold value $Nthr0$ that has been read ($T < Nthr0$) (step 12a).

If it is found as the result of step 10 that the communication type is 1, the call admission controller 30 reads the threshold value $Nthr1$ corresponding communication type 1 from the memory 50 (step 15a). Then, the call admission controller 30 checks if the total traffic T is lower than the threshold value $Nthr1$ that has been read ($T < Nthr1$) (step 16a).

The other processing steps are the same as those in the processing procedure shown in FIG. 3. This modification has the advantage of saving the area in the memory 50.

As described above, according to the present invention, in communications in which the priority levels in resource allocation are varied depending on a communication type upon allocating the resources required for each communication from those shared by a plurality of communications, this system impartially allocates resources regardless of communication types while ensuring efficient resource usage.

There are following two modes realizing a system in which the difference in ease of resource allocation between communication types is increased as the measured traffic value increases.

In first mode, a plurality of threshold values used for determining whether or not the resources are to be allocated are set up in advance. The plurality of threshold values differ from each other according to the communication types and a predetermined number of divided traffic amount ranges such that a difference in ease of resource allocation between the communication types increases as a traffic value increases. Whether or not to allocate resources to a communication associated with a connection request is determined based on a selected threshold value and a measured traffic. As compared with a second mode that will be described below, the contents of the memory need not to be re-written.

In the second mode, the traffic of resources allocated and shared when a communication connection request is made is measured. A plurality of threshold values that are used for determining whether or not the resources are to be allocated to a communication associated with the connection request and that differ from each other according to the communication types are updated and set up such that a difference in ease of resource allocation between the communication types increases as the measured traffic value increases. Whether or not to allocate resources to the communication of the connection request is determined based on a selected threshold value and a measured traffic. As compared with the first mode described above, this mode saves the memory area.

It should be understood that many modifications and adaptations of the invention will become apparent to those skilled in the art and it is intended to encompass such obvious modifications and changes in the scope of the claims appended hereto.

**Claims**

1. Call admission control method for use in a communication system, in which, each time a communication is performed, resources necessary for the communication are allocated from common resources shared by a plurality of communications of different communication types, comprising the steps:

   - setting up in advance a table comprising a threshold value for each communication type for a predetermined number of divided traffic amount ranges, wherein the relation between thresholds of the communication types changes for changing total traffic, such that the call acceptability of a first communication type is made lower in relation to that of a second communication type;
   - classifying a requested communication into one of a plurality of communication types according to a communication parameter of the requested communication;
   - measuring a total traffic on resources currently allocated for communications of all communication types;
   - selecting the appropriate resource allocation admission threshold value with respect to the type of the requested communication and the measured total traffic; and
   - deciding on allocation of resources necessary for the communication when the total traffic is lower than the selected resource allocation admission threshold value.

2. Call admission control method according to claim 1, **characterized in that** a difference between the call acceptability of the first communication type and that of the second communication type is increasing with the amount of total traffic.

3. Call admission control method according to claim 1 or 2, **characterized in that** a group of resource allocation admission threshold values with respect to a communication type is defined in the table, wherein each resource allocation admission threshold value in the group is assigned to a sub-range of total traffic.

4. Communication system, in which, each time a communication is performed, resources necessary for the communication are allocated from common resources shared by a plurality of communications of different communication types, comprising:

   - a call processing controller (20) adapted to classify a requested communication into one of a plurality of communication types according to a communication parameter of the requested communication;
   - a measurement unit (70) adapted to measure a total traffic on resources currently allocated for communications of all communication types;
   - a call admission controller (40) adapted to

     -- set up in advance a table comprising a threshold value for each communication type for a predetermined number of divided traffic amount ranges, wherein the relation between thresholds of the communication types changes for changing total traffic, such that the call acceptability of a first communication type is made lower in relation to that of a second communication type;
     -- select an appropriate resource allocation admission threshold value with respect to the type of the requested communication and the measured total traffic; and to
     -- decide on allocation of resources necessary for the communication when the total traffic is lower than the selected resource allocation admission threshold value.

**5.** Communication system according to claim 4, **characterized in that** it comprises a memory unit (50) adapted to store the table set up in advance.

**6.** Communication system according to claim 4 or 5, **characterized in that**, when a first communication type 0 and a second communication type 1 are provided, the measurement unit (30, 70) is adapted to measure the traffic T according to

$$T = C0 \times M0 + C1 \times M1,$$

wherein C0 and C1 are a number of communications being executed for communication type 0 and for communication type 1, respectively, and wherein M0 and M1 are a number of lines requested for one communication of communication type 0 and for one communication of communication type 1, respectively.

**Revendications**

**1.** Procédé de commande d'admission d'appels pour l'utilisation dans un système de communication dans lequel, chaque fois qu'une communication est exécutée, des ressources nécessaires pour la communication sont affectées à partir de ressources communes, partagées par une pluralité de communications appartenant à différents types de communication, le procédé comprenant les étapes consistant à :

- constituer, d'avance, une table comprenant une valeur de seuil pour chaque type de communication pour un nombre prédéterminé de plages de volume de trafic divisé, la relation entre des seuils des types de communications changeant pour changer le trafic total, de telle manière que l'admissibilité d'un appel d'un premier type de communication soit rendue plus faible par rapport à celle d'un second type de communication ;
- classifier une communication demandée dans l'un des types de la pluralité de types de communication en fonction d'un paramètre de communication de la communication demandée ;
- mesurer un trafic total sur des ressources actuellement affectées pour des communications de tout type de communications ;
- sélectionner la valeur appropriée de seuil d'admission d'affectation de ressources, par rapport au type de la communication demandée et au trafic total mesuré ; et
- décider d'une affectation de ressources nécessaires à la communication, lorsque le trafic total est inférieur à la valeur sélectionnée de seuil d'admission d'affectation de ressources.

**2.** Procédé de commande d'admission d'appels selon la revendication 1, **caractérisé en ce qu'**une différence entre l'acceptabilité d'un appel du premier type de communication et celle d'un appel du second type de communication augmente en fonction du volume du trafic total.

**3.** Procédé de commande d'admission d'appels selon la revendication 1 ou 2, **caractérisé en ce qu'**un groupe de valeurs de seuil d'admission d'affectation de ressources, par rapport à un type de communication, est défini dans la table, dans laquelle chaque valeur de seuil d'admission d'affectation de ressources dans le groupe est affectée à une sous-plage de trafic total.

**4.** Système de communications dans lequel, chaque fois qu'une communication est exécutée, des ressources nécessaires pour la communication sont affectées à partir de ressources communes, partagées par une pluralité de communications appartenant à différents types de communication, le système comprenant :

- une unité de commande de traitement d'appels (20) propre à classer une communication demandée dans l'un des types d'une pluralité de types de communication en fonction d'un paramètre de communication de la communication demandée ;
- une unité de mesure (70) propre à mesurer un trafic total sur des ressources actuellement affectées pour des communications de tout type de communications ;
- une unité de commande d'admission d'appels (40) propre à :

-- constituer, d'avance, une table comprenant une valeur de seuil pour chaque type de communication pour un nombre prédéterminé de plages de volume de trafic divisé, la relation entre des seuils des types de communications changeant pour changer le trafic total, de telle manière que l'admissibilité d'un appel d'un premier type de communication soit rendue plus faible par rapport à celle d'un second type de communication ;
-- sélectionner une valeur appropriée de seuil d'admission d'affectation de ressources, par rapport au type de la communication demandée et au trafic total mesuré ; et à
-- décider de l'affectation de ressources nécessaires à la communication, lorsque le trafic total est inférieur à la valeur sélectionnée de seuil d'admission d'affectation de ressources.

5. Système de communications selon la revendication 4, **caractérisé en ce qu'**il comprend une unité formant mémoire (50) propre à stocker la table constituée d'avance.

6. Système de communications selon la revendication 4 ou 5, **caractérisé en ce que**, lorsqu'un premier type de communication 0 et un second, type de communication 1 sont présents, l'unité de mesure (30, 70) est propre à mesurer le trafic T comme suit :

$$T = C0 \times M0 + C1 \times M1,$$

où C0 et C1 représentent un nombre de communications en cours d'exécution respectivement pour le type de communication 0 et pour le type de communication 1, et M0 et M1 indiquent respectivement un nombre de lignes demandées respectivement pour une communication du type de communication 0 et pour une communication du type de communication 1.

**Patentansprüche**

1. Anrufzulassungssteuerverfahren zur Verwendung in einem Kommunikationssystem, in welchem jedes Mal bei Durchführen einer Kommunikation für die Kommunikation erforderliche Ressourcen von Gemeinschaftsressourcen zugeteilt werden, die durch eine Vielzahl von Kommunikationen unterschiedlicher Kommunikationstypen gemeinsam genutzt werden, die Schritte umfassend zum:

- Einrichten einer Tabelle im voraus, die einen Schwellenwert umfasst für jeden Kommunikationstyp für eine vorbestimmte Anzahl von aufgeteilten Verkehrsmengenbereichen, wobei die Beziehung zwischen Schwellen von den Kommunikationstypen sich ändert für einen sich ändernden Gesamtverkehr, so dass die Anrufannehmfähigkeit eines ersten Kommunikationstyps niedriger gemacht wird in Bezug zu der eines zweiten Kommunikationstyps;
- Klassifizieren einer angeforderten Kommunikation in einen von einer Vielzahl von Kommunikationstypen gemäß einem Kommunikationsparameter der angeforderten Kommunikation;
- Messen eines Gesamtverkehrs auf gegenwärtig für Kommunikationen von allen Kommunikationstypen zugeteilten Ressourcen;
- Auswählen des angemessenen Schwellenwertes zur Zulassung einer Ressourcenzuteilung bezüglich des Typs der angeforderten Kommunikation und des gemessenen Gesamtverkehrs; und
- Entscheiden über eine Zuteilung von für die Kommunikation erforderlichen Ressourcen, wenn der Gesamtverkehr niedriger ist als der ausgewählte Schwellenwert zur Zulassung einer Ressourcenzuteilung.

2. Anrufzulassungssteuerverfahren gemäß Anspruch 1, **dadurch gekennzeichnet, dass** ein Unterschied zwischen der Anrufannehmfähigkeit des ersten Kommunikationstyps und der des zweiten Kommunikationstyps zunimmt mit der Menge des Gesamtverkehrs.

3. Anrufzulassungssteuerverfahren gemäß Anspruch 1 oder 2, **dadurch gekennzeichnet, dass** eine Gruppe von Schwellenwerten zur Zulassung einer Ressourcenzuteilung bezüglich eines Kommunikationstyps in der Tabelle definiert ist, wobei jeder Schwellenwert zur Zulassung einer Ressourcenzuteilung in der Gruppe einem Unterbereich des Gesamtverkehrs zugewiesen ist.

4. Kommunikationssystem, in welchem jedes Mal bei Durchführen einer Kommunikation für die Kommunikation erforderliche Ressourcen von Gemeinschaftsressourcen zugeteilt sind, die durch eine Vielzahl von.Kommunikationen von unterschiedlichen Kommunikationstypen gemeinsam genutzt werden, umfassend:

- eine Anrufverarbeitungssteuereinheit (20), die angepasst ist zum Klassifizieren einer angeforderten Kommunikation in einen von einer Vielzahl von Kommunikationstypen gemäß einem Kommunikationsparameter der angeforderten Kommunikation;
- eine Messeinheit (70), die angepasst ist zum Messen eines Gesamtverkehrs auf Ressourcen, die gegenwärtig für Kommunikationen von allen Kommunikationstypen zugeteilt sind;
- eine Anrufzulassungssteuereinheit (40), die angepasst ist zum

-- Errichten einer Tabelle im voraus, die einen Schwellenwert umfasst für jeden Kommunikationstyp für eine vorbestimmte Anzahl von aufgeteilten Verkehrsmengenbereichen, wobei die Beziehung zwischen Schwellen der Kommunikationstypen sich ändert für einen sich ändernden Gesamtverkehr, so dass die Anrufannehmfähigkeit eines ersten Kommunikationstyps niedriger gemacht wird in Bezug zu der eines zweiten Kommunikationstyps;

-- Auswählen eines angemessenen Schwellenwertes zur Zulassung einer Ressourcenzuteilung bezüglich des Typs der angeforderten Kommunikation und des gemessenen Gesamtverkehrs; und
-- Entscheiden über eine Zuteilung von für die Kommunikation erforderlichen Ressourcen, wenn der Gesamtverkehr niedriger ist als der ausgewählte Schwellenwert zur Zulassung einer Ressourcenzuteilung.

5. Kommunikationssystem gemäß Anspruch 4, **dadurch gekennzeichnet, dass** es eine Speichereinheit (50) umfasst, die angepasst ist zum Speichern der im voraus errichteten Tabelle.

6. Kommunikationssystem gemäß Anspruch 4 oder 5, **dadurch gekennzeichnet, dass**, wenn ein erster Kommunikationstyp 0 und ein zweiter Kommunikationstyp 1 bereitgestellt sind, die Messeinheit (30, 70) angepasst ist zum Messen des Verkehrs T gemäß

$$T = C0 \times M0 + C1 \times M1,$$

wobei C0 und C1 die Anzahl von Kommunikationen sind, die für Kommunikationstyp 0 bzw. für Kommunikationstyp 1 ausgeführt werden, und wobei M0 und M1 die Anzahl von Leitungen sind, die für eine Kommunikation vom Kommunikationstyp 0 bzw. für eine Kommunikation vom Kommunikationstyp 1 angefordert werden.

# FIG.1

COMMUNICATION FACILITIES

10

1

CALL PROCESSING CONTROLLER

20

CALL ADMISSION CONTROLLER

30

COMMUNICATION FACILITY CONTROLLER

40

MEMORY

50

60

# FIG.2

| RANGES OF TOTAL TRAFFIC T | COMMUNICATION TYPE 0 | COMMUNICATION TYPE 1 |
|---|---|---|
| $T < T1$ | Nthr01 | Nthr11 |
| $T1 \leqq T < T2$ | Nthr02 | Nthr12 |
| $T2 \leqq T < T3$ | Nthr03 | Nthr13 |
| $T3 \leqq T < T4$ | Nthr04 | Nthr14 |
| $T \geqq T4$ | Nthr05 | Nthr15 |

# FIG.3

```
                    ( START )
                         │
                         ▼
              ┌──────────────────────┐  S1
    YES       │   DISCONNECTION      │
 ┌────────────┤ REQUEST PRESENT      │
 │            │         ?            │
 │            └──────────┬───────────┘
 │                       │ NO
 ▼                       ▼
┌──────────────┐ S2   ┌──────────────────────┐ S7
│   WHICH      │      │   CONNECTION         │   NO
│COMMUNICATION │──1   │   REQUEST            ├──────
│   TYPE?      │  │   │   PRESENT?           │
└──────┬───────┘  │   └──────────┬───────────┘
    0  │          │              │ YES
  S3   ▼      S5  ▼          S8  ▼
┌──────────┐  ┌──────────┐  ┌──────────────────────────┐
│ RELEASE  │  │ RELEASE  │  │ READ CURRENT NO. OF      │
│  CALL    │  │  CALL    │  │ COMMUNICATIONS, C0 AND   │
└────┬─────┘  └────┬─────┘  │ C1, FROM MEMORY 50       │
  S4 │          S6 │        └──────────┬───────────────┘
     ▼             ▼                S9 ▼
┌──────────┐  ┌──────────┐  ┌──────────────────────────┐
│ C0=C0-1  │  │ C1=C1-1  │  │ CALCULATE TOTAL          │
└────┬─────┘  └────┬─────┘  │ TRAFFIC AMOUNT           │
     │             │        │ T=C0×M0+C1×M1            │
                            └──────────┬───────────────┘
```

$$C0 = C0 - 1$$

$$C1 = C1 - 1$$

$$T = C0 \times M0 + C1 \times M1$$

```
                         S10 ▼
                    ┌──────────────────┐
                    │    WHICH         │
                    │ COMMUNICATION    │──1──────────┐
                    │    TYPE?         │             │
                    └────────┬─────────┘             │
                          0  │ S11                   │ S15
                             ▼                       ▼
              ┌──────────────────────┐    ┌──────────────────────┐
              │ READ THRESHOLD       │    │ READ THRESHOLD       │
              │ VALUE Nthr0i         │    │ VALUE Nthr1i         │
              │ CORRESPONDING TO     │    │ CORRESPONDING TO     │
              │ TOTAL TRAFFIC T      │    │ TOTAL TRAFFIC T      │
              └──────────┬───────────┘    └──────────┬───────────┘
                    S12  ▼                       S16 ▼
              ┌──────────────┐  NO          ┌──────────────┐  NO
              │  T<Nthr0i?   ├─────         │  T<Nthr1i?   ├─────
              └──────┬───────┘              └──────┬───────┘
                 YES │ S13                     YES │ S17
                     ▼                             ▼
              ┌──────────────────┐        ┌──────────────────┐
              │ ACCEPT REQUEST   │        │ ACCEPT REQUEST   │
              └──────┬───────────┘        └──────┬───────────┘
                S14  ▼                       S18 ▼
              ┌──────────────┐            ┌──────────────┐
              │  C0=C0+1     │            │  C1=C1+1     │
              └──────────────┘            └──────────────┘
```

S19
┌──────────────┐
│   REJECT     │
│   REQUEST    │
└──────────────┘

$$C0 = C0 + 1$$

$$C1 = C1 + 1$$

# FIG.4

```
                              ┌─ 10
                  ┌───────────────────────────┐           ↘ 1a
                  │                           │
                  │    COMMUNICATION          │
                  │    FACILITIES             │
                  │                           │
                  └───────────────────────────┘
                     ↕              ↕
    ┌─ 20          ┌─ 30          ┌─ 40
┌──────────┐   ┌──────────┐   ┌──────────────┐
│  CALL    │   │  CALL    │   │COMMUNICATION │
│PROCESSING│   │ADMISSION │   │  FACILITY    │
│CONTROLLER│   │CONTROLLER│   │ CONTROLLER   │
└──────────┘   └──────────┘   └──────────────┘
     │              │                │
─────┴──────────────┼────────────────┼──────
      ┌─ 60         │                │
               ┌─────────────┐  ┌──────────┐
               │  ADMISSION  │  │ MEMORY   │
               │  THRESHOLD  │  └──────────┘
               │   VALUE     │     └─ 50
               │ CONTROLLER  │
               └─────────────┘
                     └─ 70
```

# FIG.5

| COMMUNICATION TYPE 0 | COMMUNICATION TYPE 1 |
|---|---|
| Nthr0 | Nthr1 |

12

# FIG.6

START

**S1**
DISCONNECTION REQUEST PRESENT ?

YES ──→

NO ──→

**S2**
WHICH COMMUNICATION TYPE?

0 ──→ **S3** RELEASE CALL
**S4** $C0=C0-1$

1 ──→ **S5** RELEASE CALL
**S6** $C1=C1-1$

**S7**
CONNECTION REQUEST PRESENT ?

NO ──→

YES ──→

**S8**
READ CURRENT NO. OF COMMUNICATIONS, C0 AND C1, FROM MEMORY 50

**S9**
CALCULATE TOTAL TRAFFIC AMOUNT $T=C0 \times M0+C1 \times M1$

**S19**
REJECT REQUEST

**S10**
WHICH COMMUNICATION TYPE?

0 ──→

1 ──→

**S11a**
READ THRESHOLD VALUE Nthr0

**S12a**
$T<Nthr0$?
NO ──→
YES ──→

**S13**
ACCEPT REQUEST

**S14**
$C0=C0+1$

**S15a**
READ THRESHOLD VALUE Nthr1

**S16a**
$T<Nthr1$?
NO ──→
YES ──→

**S17**
ACCEPT REQUEST

**S18**
$C1=C1+1$